# EUROPEAN PATENT SPECIFICATION

(11) **EP 2 305 570 B1**
(45) Date of publication and mention of the grant of the patent: **10.08.2016**
(21) Application number: 09766535.0
(22) Date of filing: 05.06.2009
(51) Int. Cl.: B29C 73/16, B29L 30/00

(54) **STRUCTURE FOR PREVENTING DISLOCATION OF CONTAINER, AND SEALING PUMP-UP DEVICE**
STRUKTUR ZUR VERHINDERUNG DER VERLAGERUNG EINES BEHÄLTERS UND DICHTUNGSPUMPVORRICHTUNG
STRUCTURE DESTINÉE À EMPÊCHER LA DISLOCATION D'UN RÉCIPIENT, ET DISPOSITIF DE POMPAGE ÉTANCHE

(30) Priority: 19.06.2008 JP 2008160640
(43) Date of publication of application: 06.04.2011
(73) Proprietor: Bridgestone Corporation, Tokyo 104-8340 (JP)
(72) Inventor: YOSHIDA, Masaki, Tokyo 104-8340 (JP); SENNO, Yoshikazu, Tokyo 104-8340 (JP); TAKEDA, Yuji, Tokyo 104-8340 (JP)
(74) Representative: Oxley, Robin John George
(86) International application number: PCT/JP2009/060333
(87) International publication number: WO 2009/154087

(56) References cited:
- DE-A1- 10 336 959
- DE-A1- 10 341 159
- DE-A1-102005 019 766
- DE-A1-102005 019 770
- DE-U1- 20 212 101
- JP-A- 9 178 161
- JP-A- 2005 145 076
- JP-U- 53 044 311
- JP-Y- 11 001 981
- US-A1- 2004 159 365
- US-A1- 2008 098 855

## Description

### Technical Field

The present invention relates to a container detachment prevention structure that prevents detachment of a container mounted to a container mounting section, preventing a liquid agent inside the container from flowing out externally, and to a sealing and pump-up device to which the container detachment prevention structure is applied.

### Background Art

Recently, sealing and pump-up devices are becoming more common. When a pneumatic tire (referred to below simply as "tire") is punctured, such a sealing and pump-up device repairs the puncture hole in the tire with a sealing agent and pumps up the internal pressure of the tire to a designated pressure, without changing the tire or the wheel. For example, the device described in Japanese Patent Application Laid-Open (JP-A) No. 2005-145076 is known as such a sealing and pump-up device.

In JP-A No. 2005-145076, a storage container (container) containing sealant (sealing agent) is detachably mounted to a sealant extrusion unit. The storage container is a circular cylindrical shape formed with a neck portion, and an opening is formed to the leading end of the neck portion, closed off with a seal membrane. A threaded section (male thread) is formed to the outer peripheral face of the neck portion. A circular cylindrical shaped coupling portion, formed with an internal threaded portion (female thread) for threading together with the external threaded portion of the neck portion, is formed to the sealant extrusion unit, and an inside pipe portion is disposed at the inside of the coupling portion, extending along the axial direction of the coupling portion and formed with a beveled portion at the leading end thereof for piercing the seal membrane. Configuration is made here such that when the neck portion of the storage container is screwed into the coupling portion of the sealant extrusion unit, the beveled portion of the inside tube portion pierces the seal membrane. A gas supply source feeds gas into the storage container whose seal membrane has been pierced. Gas pressure thereby acts on the sealant in the storage container, and the sealant is supplied to the tire through an outflow pipe section connected to the tire.

### DISCLOSURE OF INVENTION

### Technical Problem

However, in JP-A No. 2005-145076, since the storage container is mounted to the sealant extrusion unit by screwing the external threaded portion of the neck portion of the storage container into the internal threaded portion of the coupling portion of the sealant extrusion unit, there is a concern that the thread loosens due to pressure of gas supplied into the storage container (loosening of the threading together of the external threaded portion and the internal threaded portion), and the storage container detaches from the sealant extrusion unit. After operating the device, when the storage container has been detached from the sealant extrusion unit, sometimes sealant remaining in the storage container flows out externally (outside the sealant extrusion unit).
US 2004/159365 discloses a container detachment prevention structure according to the preamble of Claims 1 and 3.

In consideration of the above circumstances, an object of the present invention is to provide a container detachment prevention structure that prevents container detachment, preventing a liquid agent from flowing out externally, and to a sealing and pump-up device to which the container detachment prevention structure has been applied.

### Solution to Problem

In order to achieve the above object, a container detachment prevention structure of claim 1 of the present invention includes: a first engaging portion provided on an outer peripheral face of a container containing a liquid agent and the container having an outflow opening for the liquid agent closed off by a sealing member; a first engaged portion that is engaged by the first engaging portion when the container is pushed into a container mounting section, the first engaged portion stopping the container from detaching from the container mounting section; and opening means that opens the sealing member on the outflow opening when the container is pushed into the container mounting section after the first engaging portion has engaged the first engaged portion, wherein the opening means includes a piercing section that pierces the sealing member and an inflow section for inflowing the liquid agent that has flowed out from the outflow opening, and the container detachment prevention structure further includes a second engaged portion that is engaged by the first engaging portion when the container is pushed into the container mounting section and the piercing section has pierced the sealing member, the second engaged portion preventing the piercing section from coming out from inside the liquid agent container..

According to the container detachment prevention structure of claim 1, when the container is pushed into the container mounting section, first the first engaging portion engages with the first engaged portion, stopping the container from detaching from the container mounting section. By thereby preventing the container from detaching from the container mounting section, liquid agent is prevented from flowing out externally. Furthermore, after the first engaging portion has engaged with the first engaged portion, when the container is pushed into the container mounting section, the sealing member on the outflow opening is opened by the opening means. Accordingly, at the point in time the sealing member of the outflow opening is opened, since the first engaging portion is reliably engaged with the first engaged portion, the container is prevented from detaching from the container mounting section and the liquid agent can be effectively prevented from flowing out externally.

### (deleted)

According to the container detachment prevention structure of claim 1, up to the point when the first engaging portion engages the second engaged portion, the sealing member is reliably pierced by the piercing section due to the container being pushed into the container mounting section. The sealing member is pierced and the liquid agent flowing out from the outflow opening flows into the inflow section.

In the container detachment prevention structure of claim 2: the container mounting section is provided with a groove extending in a direction in which the container is pushed in; the first engaging portion is a projection provided on the outer peripheral face of the container, the first engaging portion entering the groove when the container is pushed into the container mounting section; the first engaged portion is a claw portion provided to the groove, the claw portion resiliently deforming to allow movement of the projection in the pushing-in direction, and engaging with the projection and to prevent movement of the container in the detaching direction; and the second engaged portion is a groove engaged portion provided to the groove further to the pushing-in direction side than the claw portion, the second engaged portion preventing movement of the projection in the detaching direction when the projection is inserted.

According to the container detachment prevention structure of claim 2, by the projection on the container engaging with the claw portion provided in the groove of the container mounting section or with the groove engaged portion, the container is prevented from detaching from the container mounting section. Namely, the container can be prevented from detaching from the container mounting section with a simple structure.

A container detachment prevention structure of claim 3 of the present invention includes: a first engaging portion provided on an outer peripheral face of a container containing a liquid agent and the container having an outflow opening for the liquid agent closed off by a sealing member; a first engaged portion that is engaged by the first engaging portion when the container is pushed into a container mounting section, the first engaged portion stopping the container from detaching from the container mounting section; and opening means that opens the sealing member on the outflow opening when the container is pushed into the container mounting section after the first engaging portion has engaged the first engaged portion, wherein the opening means is provided with a piercing portion that pierces the sealing member and an inflow section that lets liquid agent that has flowed out from the outflow opening flow in; and the container detachment prevention structure further includes a second engaging portion provided to the outer peripheral face of the container, the second engaging portion engaging the first engaged portion when the container is pushed into the container mounting section and the piercing section has pierced the sealing member, and the second engaging portion preventing the piercing section from coming out from inside the liquid agent container.

According to the container detachment prevention structure of claim 3, up to the point when the second engaging portion engages the first engaged portion, the sealing member is reliably pierced by the piercing section due to the container being pushed into the container mounting section. The sealing member is pierced and the liquid agent flowing out from the outflow opening flows into the inflow section.

In the container detachment prevention structure of claim 4: the first engaging portion is a first projection provided to an outer peripheral face of the container; the second engaging portion is a second projection provided to the container separated further from the outflow opening side than the first projection; and the first engaged portion is a claw portion provided to the container mounting section, the claw portion resiliently deforming to allow movement of the first projection and the second projection in a pushing-in direction, and engaging with the first projection and the second projection and preventing movement of the container in a detaching direction.

According to the container detachment prevention structure of claim 4, the container is prevented from detaching from the container mounting section by the first projection or the second projection on the container engaging with the claw portion provided to the container mounting section. Namely, the container can be prevented from detaching from the container mounting section with a simple structure.

The container detachment prevention structure of claim 5 further includes a seal member provided to the container mounting section so as to make close contact with an entire periphery of an edge portion of the outflow opening and seal between the container and the container mounting section when the piercing section pierces the sealing member.

According to the container detachment prevention structure of claim 5, when the container is pushed into the container mounting section, at the time when the sealing member is pierced by the piercing section, the seal member provided to the container mounting section is in close contact with the entire periphery of the edge portion of the outflow opening and seals between the container and the container mounting section. Accordingly, the liquid agent is prevented from flowing out externally from between the container and the container mounting section.

The container detachment prevention structure of claim 6 further includes a cover that covers the container pushed into the container mounting section and the container mounting section.

According to the container detachment prevention structure of claim 6, the container pushed into the container mounting section and the container mounting section are covered by the cover. Accordingly, detachment of the container from the container mounting section due to an operator is prevented.

In the container detachment prevention structure of claim 7 the cover is formed from a transparent material or a semi-transparent material.

According to the container detachment prevention structure of claim 7, the pushed-in state of the container into the container mounting section can be visibly inspected while also preventing the container being detached from the container mounting section due to an operator.

A sealing and pump-up device of claim 8 includes: the container detachment prevention structure of any one of claim 1 to claim 7, wherein the liquid agent of the container is a sealing agent employed for repairing a pneumatic tire; compressed air supply means that generates compressed air and supplies the compressed air to the inflow section; an air and liquid supply tube for supplying the sealing agent that has flowed into the inflow section and the compressed air into the pneumatic tire.

According to the sealing and pump-up device of claim 8, when the container is pushed into the container mounting section, first the first engaging portion engages with the first engaged portion, stopping the container from detaching from the container mounting section. Then, after the first engaging portion has engaged with the first engaged portion, when the container is pushed into the container mounting section, the sealing member on the outflow opening is pierced by the piercing section. The sealing agent flows out from the outflow opening into the inflow section due to the sealing member being pierced. Compressed air generated by the compressed air supply means is supplied into the inflow section. This compressed air enters the liquid agent container from the inflow section through the outflow opening, raises the pressure inside the liquid agent container, and any sealing agent remaining in the liquid agent container is pushed out into the supply liquid chamber, and the pressure acts on the sealing agent in the inflow section and pushes out (supplies) the sealing agent through the air and liquid supply tube into the pneumatic tire. Note that the compressed air accompanying supply of the sealing agent also is supplied into the pneumatic tire. After the sealing agent and compressed air have been supplied into the pneumatic tire, the sealing agent is filled into the puncture hole by running for a designated distance. After running, the air pressure of the pneumatic tire is checked, and if required compressed air is re-supplied (filled). Repair operation on the pneumatic tire is thereby completed.

In claim 8, since the first engaging portion engages with the first engaged portion when the container is pushed into the container mounting section, detachment of the container from the container mounting section is prevented, and the sealing agent is prevented from flowing out externally. Furthermore, at the point in time when the sealing member on the outflow opening is pierced, since the first engaging portion is reliably engaged with the first engaged portion, the container is prevented from detaching from the container mounting section, and the sealing agent is effectively prevented from flowing out externally. Advantageous Effects of Invention

As explained above, the container detachment prevention structure and the sealing and pump-up device of the present invention can prevent detaching of the container and avoid the sealing agent flowing out externally.

### Brief Description of the Drawings

### BRIEF DESCRIPTION OF DRAWINGS

Fig. 1 is a perspective view of a sealing and pumping device according to a first exemplary embodiment of the present invention, as viewed from the front face side.
Fig. 2 is a perspective view showing a connected state of a sealing and pumping device and a pneumatic tire.
Fig. 3 is a partial cross-section showing a state prior to mounting a liquid agent container to a container mounting section.
Fig. 4 is a side view showing a state in which a liquid agent container is pushed into a container mounting section and a projection is engaged by a claw portion.
Fig. 5 is a partial lateral cross-section showing a relationship between a liquid agent container and a container mounting section when the liquid agent container is pushed into the container mounting section and a projection is engaged by a claw portion.
Fig. 6 is a side view showing a liquid agent container pushed into a container mounting section and a projection in an engaged state in a slit engaged portion.
Fig. 7 is a partial lateral cross-section showing a relationship between a liquid agent container and a container mounting section when the liquid agent container is pushed into the container mounting section and a projection is engaged in a slit engaged portion.
Fig. 8 is a side view showing a path of movement of a projection of a liquid agent container from a claw portion of a container mounting section towards a slit engaged portion.
Fig. 9 is a side view showing a path of a projection of a liquid agent container engaging with an indentation of a slit engaged portion of a container mounting section.
Fig. 10 is a side view showing a modified example of a projection of a liquid agent container of a first exemplary embodiment.
Fig. 11 is lateral cross-section showing a sealing and pump-up device of a second exemplary embodiment, with a liquid agent container pushed into a container mounting section and a first projection in an engaged state with an engaging portion.
Fig. 12 is a lateral cross-section showing a sealing and pump-up device of a second exemplary embodiment with a liquid agent container pushed into a container mounting section and a second projection in an engaged state with an engaging portion.
Fig. 13 is a lateral cross-section showing a sealing and pump-up device of an alternative exemplary embodiment with a second projection engaged with an engaging portion, and with a cover covering the engaging portion.

### BEST MODE FOR CARRYING OUT THE INVENTION

### First Exemplary Embodiment

Explanation will now be given of a sealing and pumping device of the present invention, applied with a container detachment prevention structure of the present invention.

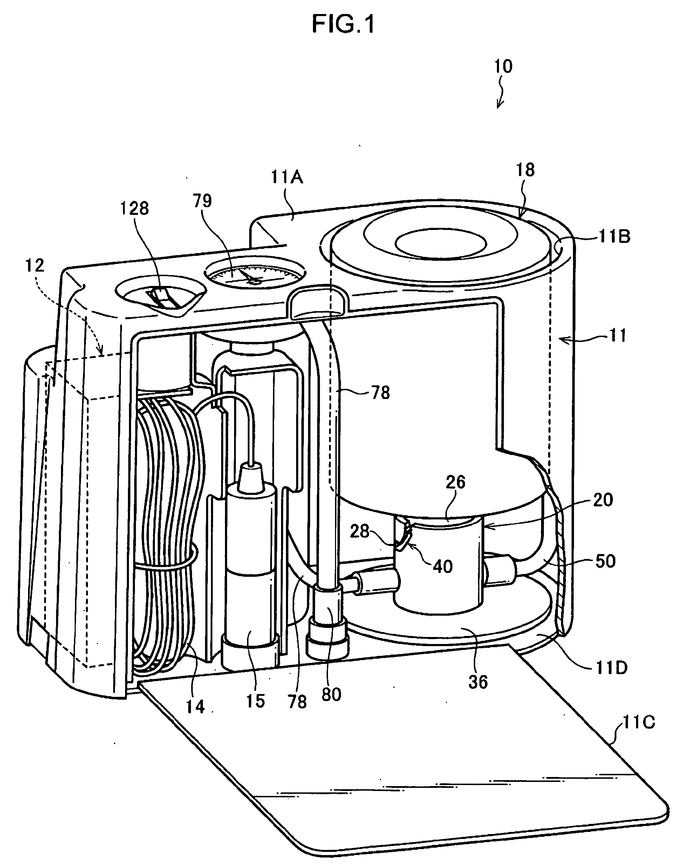

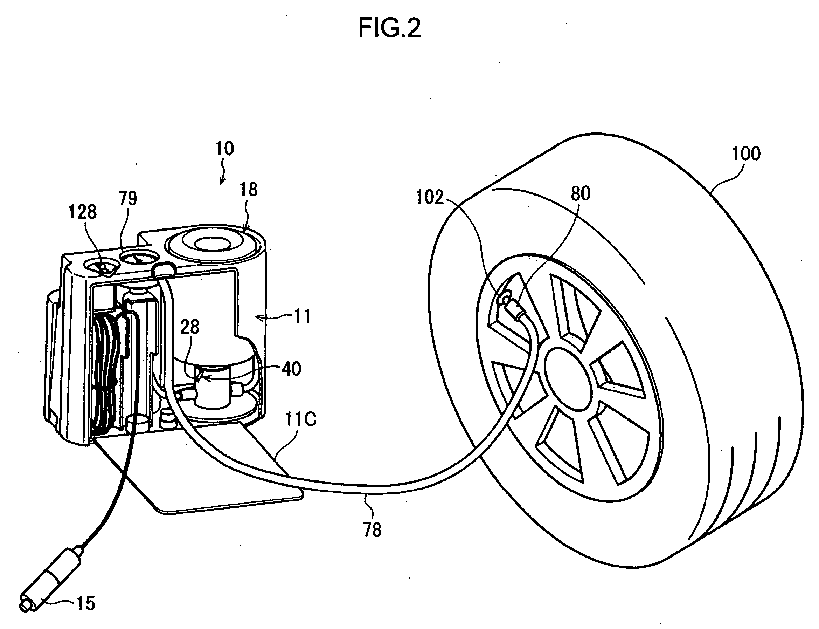

Fig. 1 shows a perspective view of a sealing and pumping device 10 (referred to below simply as "sealing device") according to a first exemplary embodiment, as viewed from the front face side. Fig. 2 is a perspective view showing a connected state of the sealing device 10 and a pneumatic tire 100 (referred to below simply as "tire"). When a tire mounted to a vehicle, such as an automobile or the like, is punctured, the sealing device 10 is a device for repairing the puncture hole in the tire with a sealing agent and re-pressurizing (pumping up) the internal pressure of the tire to a designated pressure, without changing the tire or the wheel.

As shown in Fig. 1 and Fig. 2, the sealing device 10 is equipped with a box shaped casing 11. A compressor unit 12 (see Fig. 1) and an injection unit 20 are disposed within the casing 11. A container mounting section 35 (described in detail below) is provided at the top end of the injection unit 20. The container mounting section 35 is configured such that a neck portion 26 (described in detail below) of the liquid agent container 18 is mounted thereto. Fig.1 and Fig. 2 show states in which the neck portion 26 of the liquid agent container 18 is mounted into the container mounting section 35. The liquid agent container 18 is stored separately to the casing 11, and when using the sealing device 10, the liquid agent container 18, with the neck portion 26 in a downwards facing state, is mounted to the container mounting section 35 through a container insertion opening 11B formed in a top face 11A of the casing 11. The liquid agent container 18 is thereby set in the sealing device 10. A lid 11C is rotatably attached to the front face of the casing 11. The inside of the casing 11 can be visually inspected by opening the lid 11C.

An air compressor and a drive motor, a power circuit, a control board and the like of the air compressor, are disposed within the compressor unit 12, and a power source cable 14 is provided extending from the power circuit to outside of the unit. Power can be supplied through the power circuit to the motor and the like from a battery mounted to a vehicle, by, for example, inserting a plug 15 provided at the leading end of the power source cable 14 into the socket of a cigarette lighter installed in the vehicle. The air compressor of the compressor unit 12 is capable of generating compressed air at a pressure higher than the designated pressure for each of various types of tire 100 to be repaired (see Fig. 2) (for example at 300 kPa or above).

The compressor unit 12 is equipped with a power switch 128 and a pressure gauge 79, with the power switch 128 and the pressure gauge 79 attached to the top face 11 A of the casing 11.

### Liquid Agent Container

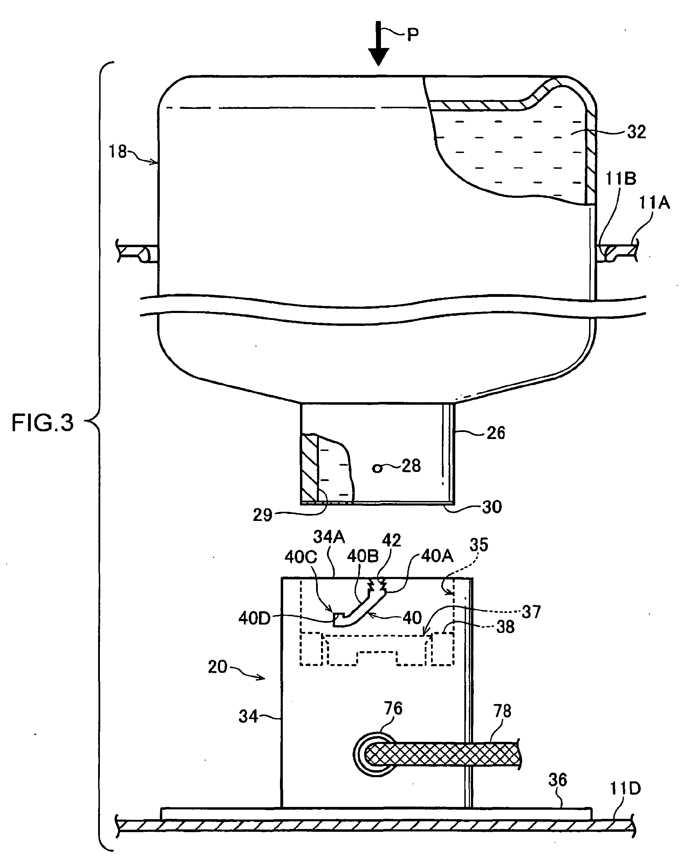

As shown in Fig. 3, the liquid agent container 18 contains a sealing agent 32. The neck portion 26 is integrally formed in a substantially circular cylinder shape projecting downwards from a portion at the bottom end of the liquid agent container 18. The neck portion 26 is formed with a diameter smaller than that of a container main body portion above the top end of the neck portion 26. The bottom end (leading end portion) of the neck portion 26 is open, with this opening configuring an outflow opening 29 for the sealing agent 32. The outflow opening 29 is closed off by a membrane shape aluminum seal 30 (an example of a sealing member). The outer peripheral edge portion of the aluminum seal 30 is fixed around the whole of the peripheral edge of the outflow opening 29, by bonding or the like.
A circular pillar shaped projection 28 is formed to the outer peripheral face of the neck portion 26.

The liquid agent container 18 is formed from a material with gas blocking characteristics, such as various resin materials (for example PP, PE or the like) or metal materials such as aluminum alloys or the like. Slightly more sealing agent 32 is filled into the liquid agent container 18 than a standard amount (for example 200g to 400g) corresponding to the type, size and the like of the tire 100 (see Fig. 2) requiring repair by the sealing device 10. It should be noted that the liquid agent container 18 of the present exemplary embodiment is filled with the sealing agent 32 with no voids (gaps), however a small amount of an inert gas such as Ar or the like may be sealed together with the sealing agent 32 within the liquid agent container 18 when filling, in order to prevent alternation of the sealing agent 32 by oxidation or the like.

### Injection Unit

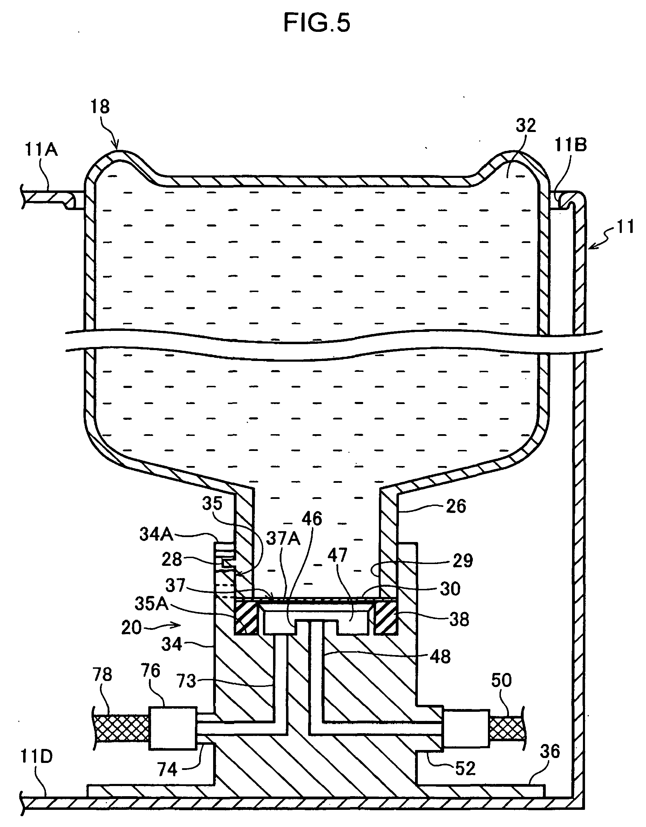

As shown in Fig. 3 and 5, a substantially circular pillar shaped unit main body portion 34 and a circular plate shaped flange portion 36 extending out to the peripheral outside of the bottom end of the unit main body portion 34 are integrally provided in the injection unit 20. The flange portion 36 is fixed inside the casing 11 to a bottom face 11D using a thread (not shown in the drawings).

An indentation of circular shaped cross-section is coaxially formed to the unit main body portion 34 at a top end portion of the unit main body portion 34. The indentation has a diameter that is larger than the outer diameter of the neck portion 26 of the liquid agent container 18, and, in other words, the neck portion 26 is of a size that can be inserted therein. The indentation configures the previously mentioned container mounting section 35 for the neck portion 26 of the liquid agent container 18.

A circular cylindrical portion 37 is provided coaxial to the unit main body portion 34 and projecting up from an indentation bottom 35A of the container mounting section 35. The circular cylindrical portion 37 is disposed such that a circumferential wall portion of the neck portion 26 can be inserted between the circular cylindrical portion 37 and the container mounting section 35. A blade portion 37A (an example of a piercing portion) is formed at a top end portion of the circular cylindrical portion 37 for piercing the aluminum seal 30 of the liquid agent container 18. The leading end of the blade portion 37A is positioned further down than the top end of the unit main body portion 34 (see Fig. 5).

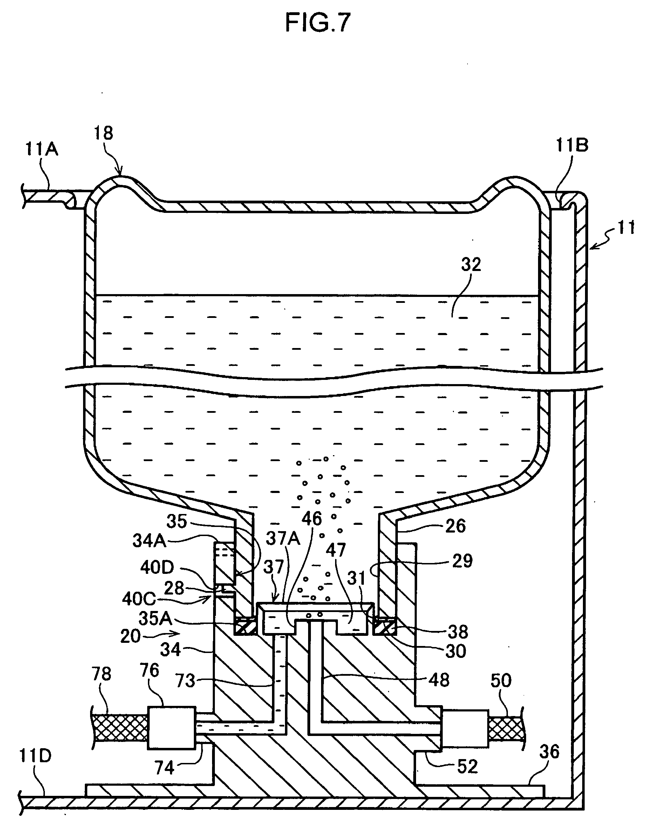

A ring shaped rubber packing 38 (an example of a seal member) is attached to the indentation bottom 35A between the circular cylindrical portion 37 and the container mounting section 35. The thickness of the rubber packing 38 is preferably set to a thickness so that the rubber packing 38 makes close contact with the bottom end of the neck portion 26 (an edge portion of the outflow opening 29) before the aluminum seal 30 is pierced by the blade portion 37A when the neck portion 26 of the liquid agent container 18 has been pushed into the container mounting section 35. Note that in the present exemplary embodiment the thickness of the rubber packing 38 is set at a thickness such that the bottom end of the neck portion 26 makes press contact (close contact) with the rubber packing 38 in an engaged state of the projection 28 with a bottom side claw portion 42, described below (see Fig. 5). Accordingly, press contact (close contact) of the bottom end of the neck portion 26 with the rubber packing 38 is ensured when the aluminum seal 30 is pierced by the blade portion 37A. The sealing agent 32 is thereby prevented from flowing out between the container mounting section 35 and the neck portion 26 (see Fig. 7).

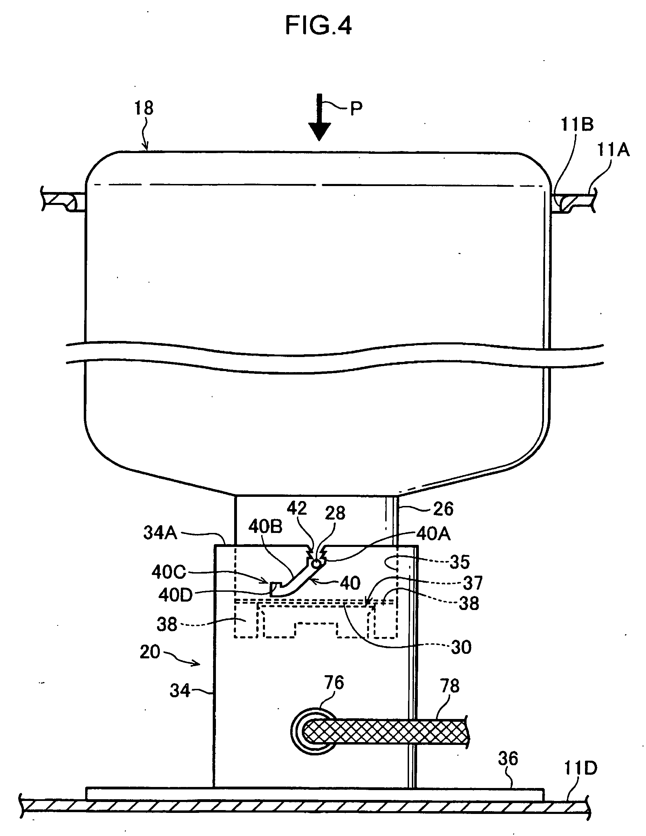

As shown in Fig. 3 and Fig. 4, a guide slit 40 is provided to a circumferential wall portion 34A between the unit main body portion 34 and the container mounting section 35, the guide slit 40 extending from the top end downwards. Specifically, the guide slit 40 is configured with: a vertical section 40A extending vertically downwards from an opening (slit opening) at the top end of the circumferential wall portion 34A; a sloping section 40B that extends downwards at a slope from the bottom end of the vertical section 40A; and a slit engaged portion 40C (an example of a groove engaged portion) extending from the bottom end of the sloping section 40B in a unit main body portion 34 circumferential direction and formed with an indentation 40D into which the top portion of the projection 28 fits. The slit width of the guide slit 40 is wide enough for the projection 28 of the liquid agent container 18 to pass through.

A pair of resiliently deformable claw portions 42 are provided to the vertical section 40A of the guide slit 40. The claw portions 42 are each formed in a triangular shape in cross-section, with the bottom face configured by a horizontal face portion extending towards the outside in the unit main body portion 34 radial direction, and the top face configured by a sloping face that slopes relative to the horizontal face portion. When the neck portion 26 is pushed into the container mounting section 35 and the projection 28 passes through from the top to the bottom, the claw portions 42 resiliently deform due to the projection 28 pressing the sloping face thereof, allowing the projection 28 to pass through. After the projection 28 has passed through, the claw portions 42 return to their original shape. When the projection 28 attempts to pass through from the bottom to the top, the bottom faces (the horizontal face portions) of the claw portions 42 engage with the projection 28 and prevent it from passing. Note that while in the present exemplary embodiment there is a pair of the claw portions 42 provided, in two locations of the vertical section 40A, top and bottom, configuration may be made with provision in a single location, or in three or more locations. Furthermore, while there is a pair of the claw portions 42 provided, configuration may be made with provision only to a wall face on one side of the vertical section 40A.

Note that, as shown in Fig. 4 and Fig. 5, the claw portions 42 are disposed in the vertical section 40A such that the aluminum seal 30 is disposed above the blade portion 37A in a state in which the projection 28 is engaged with the bottom face (the horizontal face portion) of the claw portion 42 of the guide slit 40.

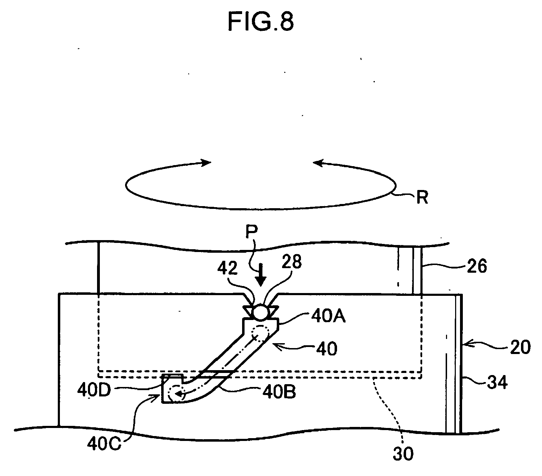

As shown in Fig. 8, the sloping section 40B slopes from the top towards the bottom. Accordingly, after the projection 28 has over ridden the claw portions 42, the projection 28 moves downwards along the sloping section 40B when the liquid agent container 18 is pressed in even further downwards. A portion of the force acting on the projection 28 (the pushing in force of the liquid agent container 18 downwards (force of arrow P direction)) is converted into a force in a rotation direction R of the liquid agent container 18. The projection 28 that has moved along the sloping section 40B is then guided into the slit engaged portion 40C.

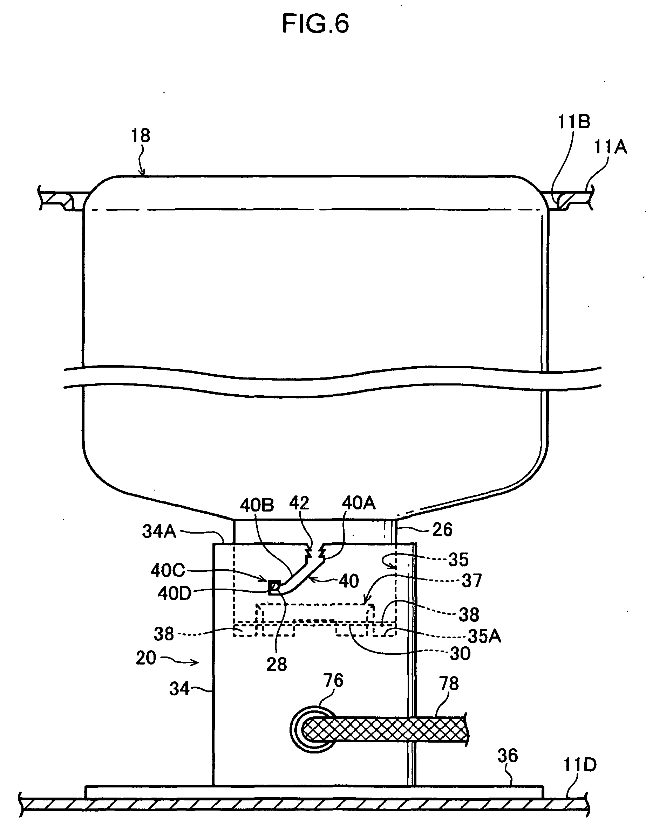

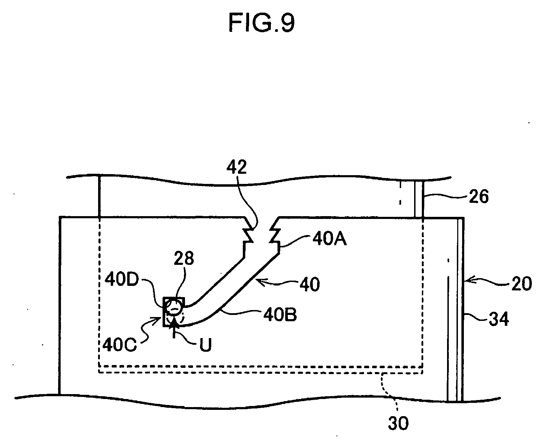

When the projection 28 has been guided into the slit engaged portion 40C, the blade portion 37A pierces the aluminum seal 30 so as to enter into the liquid agent container 18. In the state in which the projection 28 has entered the slit engaged portion 40C, the liquid agent container 18 receives an upwards force in the direction against pushing (the detachment direction U) due to recovery force from the rubber packing 38, since the rubber packing 38 has been sandwiched between the bottom end of the neck portion 26 and the indentation bottom 35A, and resiliently deformed (see Fig. 7) to a greater extent than the state shown in Fig. 5 in which the bottom end of the neck portion 26 makes press contact with the rubber packing 38. The projection 28 inserted into the slit engaged portion 40C, as shown in Fig. 9, is therefore pressed against (fitted into) the indentation 40D by force acting in the detachment direction U. Movement of the projection 28 in the detachment direction U is thereby prevented, and movement in the rotation direction R is restricted (see Fig. 6). Note that the guide slit 40 is an example of a guide path for guiding the projection 28 to the claw portion 42 and the slit engaged portion 40C.

As shown in Fig. 5, a circular pillar portion 46 is provided projecting up further to the peripheral inside of the indentation bottom 35A than the circular cylindrical portion 37. The circular pillar portion 46 is formed coaxial to the circular cylindrical portion 37, and is in communication with an internal air supply path 48, described below. The air supply path 48 is open at the top end of the circular pillar portion 46, and is in communication with an air supply tube 52, described below.

The air supply tube 52 is integrally formed in a circular cylindrical shape extending to the peripheral outside from further down the unit main body portion 34 than the container mounting section 35. The air supply tube 52 is in communication with the previously mentioned air supply path 48, and a leading end portion of a high-pressure hose 50, described later, is connected to a leading end portion on the peripheral outside of the air supply tube 52. Accordingly, configuration is such that compressed air from the compressor unit 12 is supplied to an inflow section 47, described below, through the high-pressure hose 50, the air supply tube 52 and the air supply path 48.

A circular cylindrical shaped air and liquid supply tube 74 is integrally formed further down the unit main body portion 34 than the container mounting section 35 and extending in the opposite direction to the air supply tube 52. The air and liquid supply tube 74 is in communication with an air and liquid supply path 73, described below, and the base end of a joint hose 78 is connected through a nipple 76 to a leading end portion at the peripheral outside of the air and liquid supply tube 74. As shown in Fig. 2, a valve adapter 80 is provided at the leading end portion of the joint hose 78, enabling detachable connection to a tire valve 102 of the tire 100.

The air and liquid supply path 73 is formed inside the unit main body portion 34 and opens to the indentation bottom 35A between the circular cylindrical portion 37 and the circular pillar portion 46. After the liquid agent container 18 has been pushed into the container mounting section 35, the aluminum seal 30 has been pierced by the blade portion 37A, and the sealing agent 32 has flowed out from the outflow opening 29 and flowed into the inflow section 47 that is a space at the inside of the circular cylindrical portion 37, the sealing agent 32 that has flowed into the inflow section 47 passes through the air and liquid supply path 73 due to pressure of the compressed air. The sealing agent 32 that has passed through the air and liquid supply path 73 is supplied by the pressure of compressed air into the tire 100 through the air and liquid supply tube 74, the joint hose 78 and the valve adapter 80.

As shown in Fig. 1 and Fig. 2, the high-pressure hose 50 is provided to the sealing device 10, extending out from the compressor unit 12. The proximal end of the high-pressure hose 50 is connected to an air compressor inside the compressor unit 12.

Explanation now follows regarding an operational procedure for repairing a punctured tire 100 using the sealing device 10.
When a puncture has occurred in the tire 100, first the sealing device 10 is placed with the power switch 128 and the pressure gauge 79 facing upwards, for example on a road surface or the like, and the lid 11C is opened (see Fig. 1 and Fig. 2).

Then, as shown in Fig. 2, the valve adapter 80 of the joint hose 78 is pulled out from inside the casing 11 and connected to the tire valve 102 of the tire 100. Then, an operator inserts the separately stored liquid agent container 18, with the neck portion 26 facing downwards, through the container insertion opening 11B, and aligns the projection 28 by sight with the slit opening of the guide slit 40. The liquid agent container 18 is then pressed forcibly downwards, such as with a hand or the like. Accordingly, as shown in Fig. 4, the projection 28 moves downwards along the guide slit 40 and passes (rides over) the claw portions 42. When this occurs, the bottom end of the neck portion 26 press contacts against the rubber packing 38 (see Fig. 5). When the liquid agent container 18 is pressed in even further downwards, the blade portion 37A pierces the aluminum seal 30, and, with the projection 28 inserted into the slit engaged portion 40C, restoring force of the resiliently deformed rubber packing 38 (see Fig. 7) presses the projection 28 against the indentation 40D (fits into). Movement of the projection 28 in the detachment direction U is thereby prevented, and movement of the projection 28 in the rotation direction R is also restricted (see Fig. 6).

When the aluminum seal 30 has been pierced, as shown in Fig. 7, the sealing agent 32 inside the liquid agent container 18 flows out through a hole 31 opened in the aluminum seal 30 and out into the inflow section 47. The projection 28 is fitted into the indentation 40D of the slit engaged portion 40C when this occurs. The blade portion 37A is also in an inserted state into the liquid agent container 18.

After the liquid agent container 18 has been pressed in, the power switch 128 is switched ON, and the compressor unit 12 operated. The compressed air generated by the compressor unit 12 is supplied through the air supply path 48 into the liquid agent container 18. When the compressed air is supplied into the liquid agent container 18, the compressed air rises up inside the liquid agent container 18, and a space (air layer) is formed above the sealing agent 32 in the liquid agent container 18 (see Fig. 7). The sealing agent 32 pressurized by the air pressure from the air layer is pushed out through the hole 31 opened in the aluminum seal 30 and into the inflow section 47. The sealing agent 32 inside the inflow section 47 is then injected (supplied) into the tire 100 through the joint hose 78.

When the compressed air is supplied into the liquid agent container 18, force on the liquid agent container 18 in the detachment direction U, namely, force acting to move the liquid agent container 18 upwards, is prevented from detaching (removing) the liquid agent container 18 from the container mounting section 35 due to the projection 28 engaged in the indentation 40D of the slit engaged portion 40C.

Note that after all of the sealing agent 32 in the liquid agent container 18 has been discharged, the sealing agent 32 in the inflow section 47 is pressurized and supplied into the tire 100 through the joint hose 78. When all the sealing agent 32 has flowed out from the inflow section 47 and the joint hose 78, the compressed air is injected into the tire 100 through the liquid agent container 18, the inflow section 47 and the joint hose 78.

The operator then stops the compressor unit 12 when the internal pressure of the tire 100 has been confirmed to be the designated pressure by the pressure gauge 79, and the valve adapter 80 is detached from the tire valve 102.

Within a specific period of time after finishing inflating the tire 100, the operator performs preparatory running of the tire by traveling a specific distance using the tire 100 that has been injected with the sealing agent 32. The sealing agent 32 thereby spreads out uniformly within the tire 100, the sealing agent 32 fills the puncture hole and seals the puncture hole. After completing preparatory running, the operator re-measures the internal pressure of the tire 100 and, when necessary, re-connects the valve adapter 80 of the joint hose 78 to the tire valve 102 of the tire 100 and re-operates the compressor unit 12 until the pressure of the tire 100 reaches the designated internal pressure. Puncture repair of the tire 100 is thereby completed, enabling driving with the tire 100 within a specific distance range while not exceeding a specific speed (for example not exceeding 80 km/h).

According to the sealing device 10, the liquid agent container 18 is prevented from detaching from the container mounting section 35 due to the pressure of supplied compressed air since the projection 28 engages with the bottom side claw portion 42 before the aluminum seal 30 is pierced by the blade portion 37A, even supposing a scenario in which the aluminum seal 30 was pierced, and the operator is in the process of pressing the liquid agent container 18 in but it is before the projection 28 has entered the slit engaged portion 40C.
Consequently, external leaking out of the sealing agent 32 due to the liquid agent container 18 detaching from the container mounting section 35 is prevented. When the projection 28 passes (rides over) the bottom side claw portion 42 from the top towards the bottom, the sealing agent 32 is prevented from flowing out between the liquid agent container 18 and the container mounting section 35 due to the bottom end of the neck portion 26 being in press contact with the rubber packing 38.

By pressing the liquid agent container 18 in up to the point the projection 28 engages with the slit engaged portion 40C, namely, by pressing the liquid agent container 18 in until it cannot be pressed in any further, the projection 28 that is guided by the guide slit 40 enters into the slit engaged portion 40C. Accordingly piercing of the aluminum seal 30 can be assured, and since the projection 28 is fitted into (engaged) with the indentation 40D of the slit engaged portion 40C, the liquid agent container 18 can be effectively prevented from detaching from the container mounting section 35. Furthermore, in a state in which the projection 28 is fitted into the indentation 40D, since the blade portion 37A, namely the leading end side of the circular cylindrical portion 37, is entered into the liquid agent container 18, compressed air supplied through the air supply path 48 can be supplied into the liquid agent container 18 with good efficiency. This enables supply of the sealing agent 32 into the tire 100 to be achieved in a short period of time.

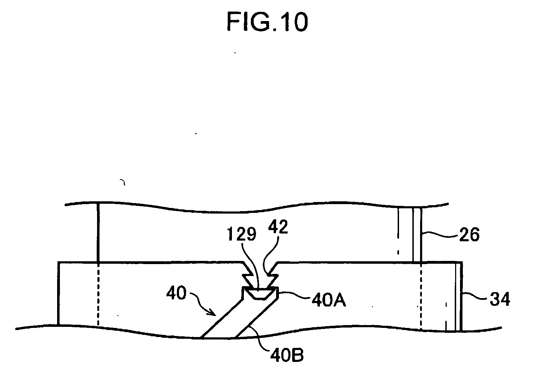

In the first exemplary embodiment, a circular cylindrical shaped projection 28 is employed, however the present invention need not be limited thereto, and, as shown in Fig. 10, a projection 129 of trapezoidal shape in cross-section may be employed. Note that when the liquid agent container 18 is viewed from the side face with the neck portion 26 downwards, the projection 129 is provided to the neck portion 26 in a trapezoidal shape so as to have a longer top face than bottom face. When the projection 129 passes the claw portions 42 from the top towards the bottom, the sloping faces of the projection 129 press against the sloping faces of the claw portion 42, resiliently deforming the claw portions 42. After having passed the claw portions 42, when the projection 28 passes from the top towards the bottom, the top face of the projection 129 engages with the bottom face (the horizontal face portions) of the claw portions 42. The degree of engagement with the claw portions 42 is raised by utilizing the trapezoidal cross-section projection 129 in place of the circular pillar shaped projection 28.

Furthermore, while in the first exemplary embodiment configuration is made with the guide slit 40 provided as an example of a guide path in the circumferential wall portion 34A, the present invention does not need to be limited to such a configuration, and configuration may be made with a groove (an example of a guide path) of similar shape to the guide slit 40 provided to the inner peripheral face of the circumferential wall portion 34A. By providing the groove in place of the guide slit 40, the operator is no longer able to release engagement of the liquid agent container 18 and the container mounting section 35 from the outside. Namely, the liquid agent container 18 can be effectively prevented from detaching from the container mounting section 35.

### Second Exemplary Embodiment

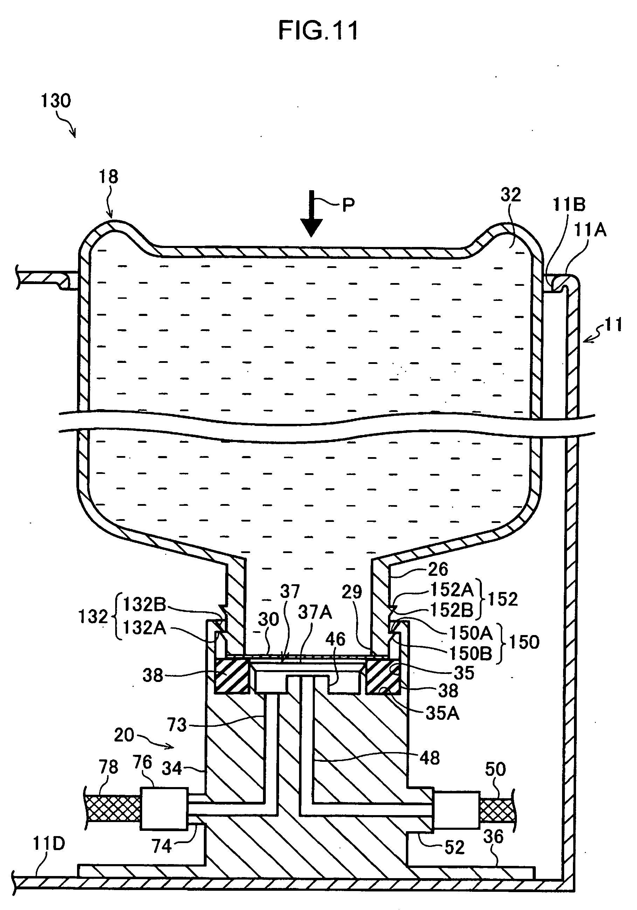

Explanation now follows regarding a second exemplary embodiment of a sealing and pump-up device. Note that similar components to those of the first exemplary embodiment are allocated the same reference numerals and explanation thereof is omitted. As shown in Fig. 11, a sealing device 130 of the second exemplary embodiment is provided with a first projection 150, a second projection 152 and an engaged portion 132, these being described below, in place of the projection 28, the claw portions 42 and the slit engaged portion 40C of the first exemplary embodiment.

As shown in Fig. 11, ring shaped projections are formed with triangular cross-section at two locations along the axial direction (top-bottom direction) to the neck portion 26 of the liquid agent container 18. Note that the projection on the outflow opening 29 side configures the first projection 150, and the projection above the first projection 150 (namely on the side away from the outflow opening 29) configures the second projection 152. The first projection 150 is configured with a top face configured by a horizontal face portion 150A that extends towards the radial direction outside of the liquid agent container 18, and with a bottom face configured by a sloping face 150B that slopes relative to the horizontal face portion 150A. The second projection 152, similarly to the first projection 150, is configured with a top face configured by a horizontal face portion 152A that extends towards the radial direction outside of the liquid agent container 18, and with a bottom face configured by a sloping face 152B that slopes relative to the horizontal face portion 152A.

The engaged portion 132 (an example of a claw portion) is formed to the inner peripheral face of the circumferential wall portion 34A of the unit main body portion 34, as a ring shaped projection formed with a triangular cross-section. The engaged portion 132 is configured with a bottom face configured by a horizontal face portion 132A that extends towards the radial direction outside of the unit main body portion 34, and with a top face configured by a sloping face 132B that slopes relative to the horizontal face portion 132A. Note that there are plural dividing grooves (not shown in the drawings) formed extending along the axial direction in the circumferential wall portion 34A of the unit main body portion 34, such that each of the portions of the circumferential wall portion 34A that have been sectioned by the dividing grooves is resiliently deformable in the direction of increase in diameter.

As shown in Fig. 11, in the present exemplary embodiment, when the neck portion 26 has been pressed into the container mounting section 35, the first projection 150 of the neck portion 26 rides over the sloping face 132B of the engaged portion 132. Configuration is made such that the ridden over horizontal face portion 132A of the engaged portion 132 engages with the horizontal face portion 150A on the first projection 150 of the neck portion 26, so as to prevent the neck portion 26 from moving upwards (in the detachment direction U). Note that when the first projection 150 of the neck portion 26 rides over the sloping face 132B of the engaged portion 132, the circumferential wall portion 34A of the unit main body portion 34 resiliently deforms in the direction of increasing diameter due to partitioning by the dividing grooves, and after having been ridden over, returns to its original state. Configuration is made such that the bottom end of the neck portion 26 makes press contact with the rubber packing 38 when the first projection 150 rides over the engaged portion 132.

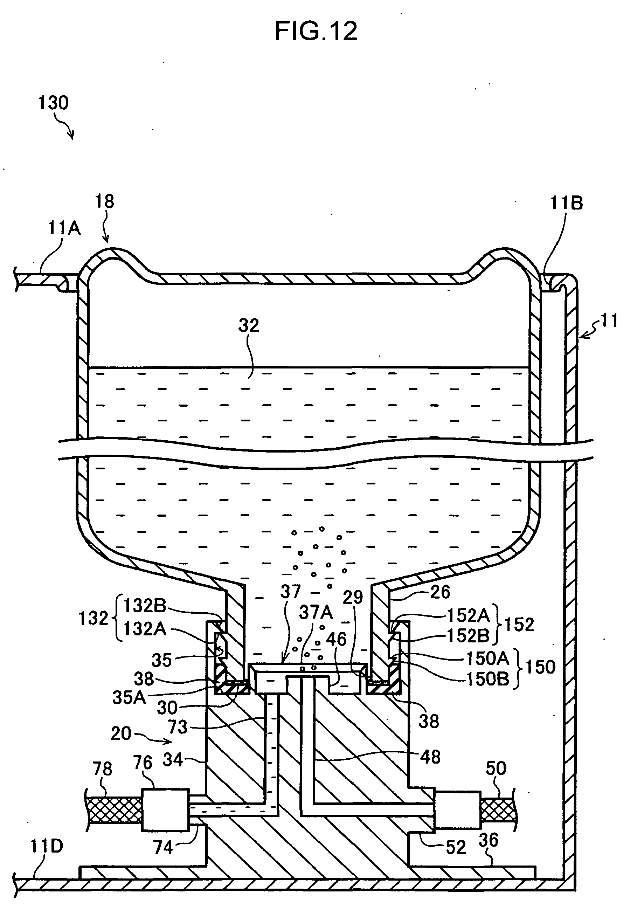

As shown in Fig. 12, when the neck portion 26 is pushed further into the container mounting section 35, the second projection 152 of the neck portion 26 rides over the sloping face 132B of the engaged portion 132. Configuration is made such that the ridden over horizontal face portion 132A of the engaged portion 132 engages with the horizontal face portion 152A on the first projection 152 of the neck portion 26, so as to prevent the neck portion 26 from moving upwards (in the detachment direction). Note that, similarly to when the first projection 150 rides over the sloping face 132B, when the first projection 152 rides over the sloping face 132B of the engaged portion 132, the circumferential wall portion 34A of the unit main body portion 34 resiliently deforms in the direction of increasing diameter, and after having been ridden over, returns to its original state. When the second projection 152 has ridden over the engaged portion 132, the blade portion 37A pierces the aluminum seal 30.

The sealing device 130 of the second exemplary embodiment has a similar operational effect to the sealing device 10 of the first exemplary embodiment. Furthermore, in the sealing device 130, since there is no need for positional alignment relative to the container mounting section 35 in the circumferential direction when the liquid agent container 18 is being pressed into the container mounting section 35, as is required in the first exemplary embodiment, the operation for setting the liquid agent container 18 in the sealing device 130 is simplified.

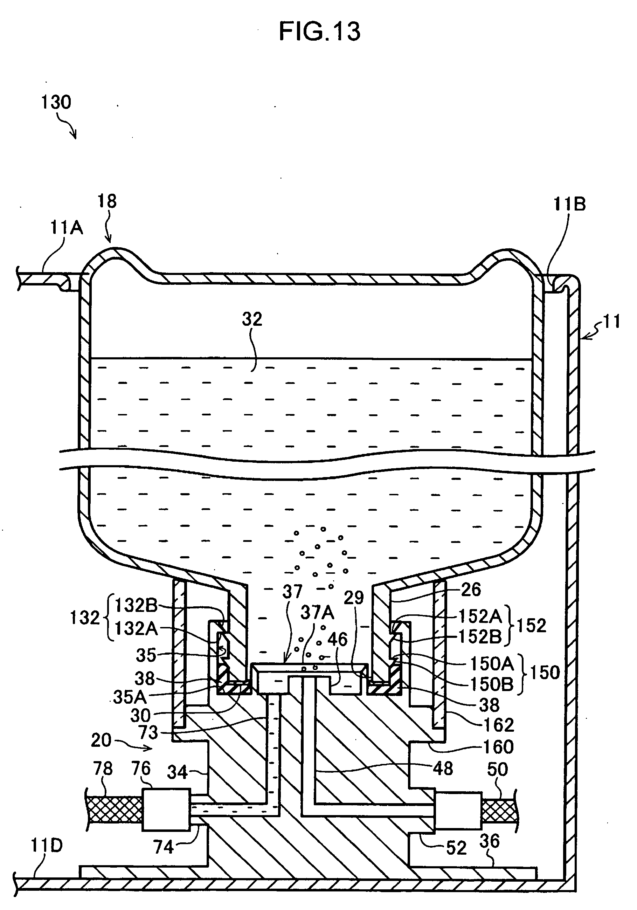

In the first and the second exemplary embodiments, since it would be possible for an operator to place their hand inside the casing 11 and released engagement of the liquid agent container 18 mounted in the container mounting section 35, configuration may be made, as shown in Fig. 13, such that a projecting portion 160 is provided to the unit main body portion 34 of the injection unit 20, and a cover 162 formed from a transparent or semi-transparent resin material attached to the top of the projecting portion 160, so as to cover the entire periphery of the engaged portion of the container mounting section 35 and the liquid agent container 18. Consequently, since an operator is no longer able to place a hand inside the casing 11 and release the engagement of the container mounting section 35 and the liquid agent container 18, the liquid agent container 18 can be effectively prevented from detaching from the container mounting section 35. Preferably the degree of transparency (light transmissivity) of the cover 162 is such that the liquid agent container 18 and the container mounting section 35 can be visually inspected through the cover 162. B providing this degree of transparency, configuration is made such that the mounting of the liquid agent container 18 to the container mounting section 35 can be visually inspected. Note that the sealing device shown in Fig. 13 may be configured by providing the projecting portion 160 and the cover 162 to the sealing device 130 of the second exemplary embodiment.

In the first exemplary embodiment, configuration is made with the projection 28 provided to the liquid agent container 18, and the guide slit 40 provided to the container mounting section 35, however the present invention need not be limited so such a configuration. Configuration may be made with a groove of similar shape to that of the guide slit 40 provided to the neck portion 26 of the liquid agent container 18, a projection provided to the inner peripheral face of the circumferential wall portion 34A of the container mounting section 35, with the projection inserted into this groove.

In the second exemplary embodiment configuration is with a ring shaped first projection 150 provided to the neck portion 26 of the liquid agent container 18, however the present invention need not be limited to such a configuration, and configuration may be made with the first projection 150 disposed intermittently around the circumferential direction of the neck portion 26. In a similar manner, configuration is with a ring shaped second projection 152 provided to the neck portion 26 of the liquid agent container 18, however the present invention need not be limited to such a configuration, and configuration may be made such that the second projection 152 is disposed intermittently around the circumferential direction of the neck portion 26.

Furthermore, while in the second exemplary embodiment configuration is with a triangular shaped cross-section engaged portion 132 provided to the container mounting section 35 the present invention need not be limited to such a configuration, and an indentation of triangular shaped cross-section may be provided to the container mounting section 35, with the first projection 150 and the second projection 152 configured so as to engage with this indentation.

Furthermore, while in the second exemplary embodiment configuration is made with the ring shaped first projection 150 and second projection 152 provided to the neck portion 26 of the liquid agent container 18, the present invention need not be limited to such a configuration. Configuration may be made with a ring shaped groove (groove extending around the circumferential direction of the neck portion 26) provided on the neck portion 26 in place of the first projection 150 and the second projection 152, respectively, configured so as to engage with the engaged portion 132 provided to the container mounting section 35.

While exemplary embodiments have been given above by way of explanation of embodiments of the present invention, these are only examples of embodiments, and various modifications can be executed within a range not departing from the scope of the invention. Obviously the scope of rights of the present invention is not limited to these exemplary embodiments.

Explanation of the Reference Numerals
- 10: SEALING AND PUMP-UP DEVICE
- 12: COMPRESSOR UNIT (COMPRESSED AIR SUPPLY MEANS)
- 18: LIQUID AGENT CONTAINER
- 28: PROJECTION (FIRST ENGAGING PORTION)
- 29: OUTFLOW OPENING
- 30: ALUMINUM SEAL (SEALING MEMBER)
- 32: SEALING AGENT (LIQUID AGENT)
- 35: CONTAINER MOUNTING SECTION
- 37A: BLADE PORTION (PIERCING SECTION)
- 38: RUBBER PACKING (SEAL MEMBER)
- 40: GUIDE SLIT
- 40C: SLIT ENGAGED PORTION (SECOND ENGAGED PORTION)
- 42: CLAW PORTION (FIRST ENGAGED PORTION)
- 47: INFLOW SECTION
- 100: PNEUMATIC TIRE
- 130: SEALING DEVICE
- 132: ENGAGED PORTION (FIRST ENGAGED PORTION)
- 150: FIRST PROJECTION (FIRST ENGAGING PORTION)
- 152: SECOND PROJECTION (SECOND ENGAGING PORTION)
- 162: COVER
- P: PUSH OUT DIRECTION
- U: DETACHMENT DIRECTION

## Claims

1. A container detachment prevention structure comprising:
a first engaging portion (28) provided on an outer peripheral face of a container (18) containing a liquid agent (32) and the container (18) having an outflow opening (29) for the liquid agent (32) closed off by a sealing member (30);
a first engaged portion (42) that is engaged by the first engaging portion (28) when the container (18) is pushed into a container mounting section (35), the first engaged portion (42) stopping the container (18) from detaching from the container mounting section (35); and opening means (37A) that opens the sealing member (30) on the outflow opening (29) when the container (18) is pushed into the container mounting section (35) after the first engaging portion (28) has engaged the first engaged portion (42), **characterized in that**:
the opening means (37A) comprises a piercing section (37A) that pierces the sealing member (30) and an inflow section (47) for inflowing the liquid agent (32) that has flowed out from the outflow opening (29); and
the container detachment prevention structure further comprises a second engaged portion (40C) that is engaged by the first engaging portion (28) when the container (18) is pushed into the container mounting section (35) and the piercing section (37A) has pierced the sealing member (30), the second engaged portion (40C) preventing the piercing section (37A) from coming out from inside the liquid agent container (18).

2. The container detachment prevention structure of claim 1, wherein:
the container mounting section (35) is provided with a groove (40) extending in a direction in which the container (18) is pushed in;
the first engaging portion (28) is a projection provided on the outer peripheral face of the container (18), the first engaging portion (28) entering the groove (40) when the container (18) is pushed into the container mounting section (35);
the first engaged portion (42) is a claw portion provided to the groove (40), the claw portion (42) resiliently deforming to allow movement of the projection (28) in the pushing-in direction, and engaging with the projection (28) and to prevent movement of the container (18) in the detaching direction (U); and
the second engaged portion (40C) is a groove engaged portion provided to the groove (40) further to the pushing-in direction side than the claw portion (42), the second engaged portion (40C) preventing movement of the projection (28) in the detaching direction (U) when the projection (28) is inserted.

3. A container detachment prevention structure comprising:
a first engaging portion (150) provided on an outer peripheral face of a container (18) containing a liquid agent (32) and the container (18) having an outflow opening (29) for the liquid agent (32) closed off by a sealing member (30);
a first engaged portion (132) that is engaged by the first engaging portion (150) when the container (18) is pushed into a container mounting section (35), the first engaged portion (132) stopping the container (18) from detaching from the container mounting section (35); and
opening means (37A) that opens the sealing member (30) on the outflow opening (29) when the container (18) is pushed into the container mounting section (35) after the first engaging portion (150) has engaged the first engaged portion (132), **characterized in that**:
the opening means (37A) is provided with a piercing portion that pierces the sealing member (30) and an inflow section (47) that lets liquid agent (32) that has flowed out from the outflow opening (29) flow in; and
the container detachment prevention structure further comprises a second engaging portion (152) provided to the outer peripheral face of the container (18), the second engaging portion (152) engaging the first engaged portion (132) when the container (18) is pushed into the container mounting section (35) and the piercing section has pierced the sealing member (30), and the second engaging portion (152) preventing the piercing section from coming out from inside the liquid agent container (18).

4. The container detachment prevention structure of claim 3, wherein:
the first engaging portion (150) is a first projection provided to an outer peripheral face of the container (18);
the second engaging portion (152) is a second projection provided to the container (18) separated further from the outflow opening side than the first projection (150); and
the first engaged portion (132) is a claw portion provided to the container mounting section (35), the claw portion (132) resiliently deforming to allow movement of the first projection (150) and the second projection (152) in a pushing-in direction, and engaging with the first projection (150) and the second projection (152) and preventing movement of the container (18) in a detaching direction (U).

5. The container detachment prevention structure of any one of claim 1 to claim 4, further comprising a seal member (38) provided to the container mounting section (35) so as to make close contact with an entire periphery of an edge portion of the outflow opening (29) and seal between the container (18) and the container mounting section (35) when the piercing section pierces the sealing member (30).

6. The container detachment prevention structure of any one of claim 1 to claim 5, further comprising a cover (162) that covers the container (18) pushed into the container mounting section (35) and the container mounting section (35).

7. The container detachment prevention structure of claim 6 wherein the cover (162) is formed from a transparent material or a semi-transparent material.

8. A sealing and pump-up device (10), comprising:
the container detachment prevention structure of any one of claim 1 to claim 7,
wherein the liquid agent (32) is a sealing agent employed for repairing a pneumatic tire (100);
compressed air supply means (12) that generates compressed air and supplies the compressed air to the inflow section (47);
an air and liquid supply tube (78) for supplying the sealing agent that has flowed into the inflow section (47) and the compressed air into the pneumatic tire (100).

## Patentansprüche

1. Struktur zur Verhinderung des Ablösens eines Behälters, Folgendes umfassend:
einen ersten in Eingriff nehmenden Abschnitt (28), welcher an einer äußeren peripheren Fläche eines ein Flüssigmittel (32) enthaltenden Behälters (18) bereitgestellt ist, wobei der Behälter (18) eine durch ein Dichtungselement (30) versperrte Ausflussöffnung (29) für das Flüssigmittel (32) aufweist;
einen ersten in Eingriff genommenen Abschnitt (42), welcher durch den ersten in Eingriff nehmenden Abschnitt (28) in Eingriff genommen wird, wenn der Behälter (18) in einen Behältermontagesabschnitt (35) geschoben wird, wobei der erste in Eingriff genommene Abschnitt (42) verhindert, dass sich der Behälter (18) von dem Behältermontagesabschnitt (35) ablöst; und
ein Öffnungsmittel (37A), welches das Dichtungselement (30) an der Ausflussöffnung (29) öffnet, wenn der Behälter (18) in den Behältermontagesabschnitt (35) geschoben wird, nachdem der erste in Eingriff nehmende Abschnitt (28) den ersten in Eingriff genommenen Abschnitt (42) in Eingriff genommen hat, **dadurch gekennzeichnet, dass**:
das Öffnungsmittel (37A) einen Durchstechabschnitt (37A), welcher das Dichtungselement (30) durchsticht, sowie einen Einfließabschnitt (47) zum Einfließen des Flüssigmittels (32) umfasst, welches aus der Ausflussöffnung (29) herausgeflossen ist; und
die Struktur zur Verhinderung des Ablösens des Behälters weiter einen zweiten in Eingriff genommenen Abschnitt (40C) umfasst, welcher durch den ersten in Eingriff nehmenden Abschnitt (28) in Eingriff genommen wird, wenn der Behälter (18) in den Behältermontagesabschnitt (35) geschoben wird und der Durchstechabschnitt (37A) das Dichtungselement (30) durchstochen hat, wobei der zweite in Eingriff genommene Abschnitt (40C) verhindert, dass der Durchstechabschnitt (37A) aus dem Inneren des Flüssigmittelbehälters (18) herauskommt.

2. Struktur zur Verhinderung des Ablösens eines Behälters nach Anspruch 1, wobei:
dem Behältermontagesabschnitt (35) eine Aushöhlung (40) bereitgestellt ist, welche sich in eine Richtung erstreckt, in welche der Behälter (18) hineingeschoben wird;
der erste in Eingriff nehmende Abschnitt (28) ein Vorsprung ist, welcher an der äußeren peripheren Fläche des Behälters (18) bereitgestellt ist, wobei der erste in Eingriff nehmende Abschnitt (28) in die Aushöhlung (40) eindringt, wenn der Behälter (18) in den Behälterhaltungsabschnitt (35) geschoben wird;
der erste in Eingriff genommene Abschnitt (42) ein Hakenabschnitt ist, welcher der Aushöhlung (40) bereitgestellt ist, wobei der Hakenabschnitt (42) sich elastisch verformt, um die Bewegung des Vorsprungs (28) in die Hineinschieberichtung zu ermöglichen, und sich mit dem Vorsprung (28) durch Ineingriffnahme verbindet, um die Bewegung des Behälters (18) in die Ablöserichtung (U) zu verhindern; und
der zweite in Eingriff genommene Abschnitt (40C) ein mittels Aushöhlung in Eingriff genommener Abschnitt ist, welcher der Aushöhlung (40) weiter entfernt von der Hineinschieberichtungsseite als der Hakenabschnitt (42) bereitgestellt ist, wobei der zweite in Eingriff genommene Abschnitt (40C) die Bewegung des Vorsprungs (28) in die Ablöserichtung (U) verhindert, wenn der Vorsprung (28) eingeführt wird.

3. Struktur zur Verhinderung des Ablösens eines Behälters, Folgendes umfassend:
einen ersten in Eingriff nehmenden Abschnitt (150), welcher an einer äußeren peripheren Fläche eines ein Flüssigmittel (32) enthaltenden Behälters (18) bereitgestellt ist, wobei der Behälter (18) eine durch ein Dichtungselement (30) versperrte Ausflussöffnung (29) für das Flüssigmittel (32) aufweist;
einen ersten in Eingriff genommenen Abschnitt (132), welcher durch den ersten in Eingriff nehmenden Abschnitt (150) in Eingriff genommen wird, wenn der Behälter (18) in einen Behältermontagesabschnitt (35) geschoben wird, wobei der erste in Eingriff genommene Abschnitt (132) verhindert, dass sich der Behälter (18) von dem Behältermontagesabschnitt (35) ablöst; und
ein Öffnungsmittel (37A), welches das Dichtungselement (30) an der Ausflussöffnung (29) öffnet, wenn der Behälter (18) in den Behältermontagesabschnitt (35) geschoben wird, nachdem der erste in Eingriff nehmende Abschnitt (150) den ersten in Eingriff genommenen Abschnitt (132) in Eingriff genommen hat, **dadurch gekennzeichnet, dass**:
dem Öffnungsmittel (37A) ein Durchstechabschnitt, welcher das Dichtungselement (30) durchsticht, sowie ein Einfließabschnitt (47) bereitgestellt ist, der Flüssigmittel (32), welches aus der Ausflussöffnung (29) herausgeflossen ist, hineinfließen lässt; und
die Struktur zur Verhinderung des Ablösens eines Behälters weiter einen zweiten in Eingriff nehmenden Abschnitt (152) umfasst, welcher der äußeren peripheren Fläche des Behälters (18) bereitgestellt ist, wobei der zweite in Eingriff nehmende Abschnitt (152) den ersten in Eingriff genommenen Abschnitt (132) in Eingriff nimmt, wenn der Behälter (18) in den Behältermontagesabschnitt (35) geschoben wird und der Durchstechabschnitt das Dichtungselement (30) durchstochen hat, und wobei der zweite in Eingriff nehmende Abschnitt (152) verhindert, dass der Durchstechabschnitt aus dem Inneren des Flüssigmittelbehälters (18) herauskommt.

4. Struktur zur Verhinderung des Ablösens eines Behälters nach Anspruch 3, wobei:
der erste in Eingriff nehmende Abschnitt (150) ein erster Vorsprung ist, welcher einer äußeren peripheren Fläche des Behälters (18) bereitgestellt ist;
der zweite in Eingriff nehmende Abschnitt (152) ein zweiter Vorsprung ist, welcher dem Behälter (18) weiter getrennt von der Ausflussöffnungsseite als der erste Vorsprung (150) bereitgestellt ist; und
der erste in Eingriff genommene Abschnitt (132) ein Hakenabschnitt ist, welcher dem Behältermontagesabschnitt (35) bereitgestellt ist, wobei der Hakenabschnitt (132) sich elastisch verformt, um die Bewegung des ersten Vorsprungs (150) und des zweiten Vorsprungs (152) in eine Hineinschieberichtung zu ermöglichen, und sich mit dem ersten Vorsprung (150) und dem zweiten Vorsprung (152) durch Ineingriffnahme verbindet und die Bewegung des Behälters (18) in eine Ablöserichtung (U) verhindert.

5. Struktur zur Verhinderung des Ablösens eines Behälters nach einem der Ansprüche 1 bis 4, weiter umfassend ein Dichtungselement (38), welches dem Behältermontagesabschnitt (35) derart bereitgestellt ist, dass es engen Kontakt mit einer gesamten Peripherie eines Randabschnitts der Ausflussöffnung (29) herstellt und zwischen dem Behälter (18) und dem Behältermontagesabschnitt (35) abdichtet, wenn der Durchstechabschnitt das Dichtungselement (30) durchsticht.

6. Struktur zur Verhinderung des Ablösens eines Behälters nach einem der Ansprüche 1 bis 5, weiter umfassend eine Abdeckung (162), welche den in den Behältermontagesabschnitt (35) geschobenen Behälter (18) und den Behältermontagesabschnitt (35) abdeckt.

7. Struktur zur Verhinderung des Ablösens eines Behälters nach Anspruch 6, wobei die Abdeckung (162) aus einem transparenten Material oder einem halbtransparenten Material gebildet ist.

8. Dichtungs- und Aufpumpvorrichtung (10), Folgendes umfassend:
die Struktur zur Verhinderung des Ablösens eines Behälters nach einem der Ansprüche 1 bis 7, wobei das Flüssigmittel (32) ein zum Reparieren eines pneumatischen Reifens (100) angewandtes Dichtungsmittel ist;
ein Druckluftzuführungsmittel (12), welches Druckluft erzeugt und dem Einfließabschnitt (47) Druckluft zuführt;
ein Luft- und Flüssigkeitszuführungsrohr (78) für die Zuführung von Dichtungsmittel, welches in den Einfließabschnitt (47) geflossen ist, und von Druckluft in den pneumatischen Reifen (100).

## Revendications

1. Structure empêchant le détachement d'un récipient, comprenant :
une première partie d'engagement (28) agencée sur une face périphérique externe d'un récipient (18) contenant un agent liquide (32), le récipient (18) comportant une ouverture de sortie (29) de l'agent liquide (32) fermée par un élément d'étanchéité (30) ;
une première partie engagée (42) engagée par la première partie d'engagement (28) lorsque le récipient (18) est poussé dans une section de montage du récipient (35), la première partie engagée (42) empêchant le détachement du récipient (18) de la section de montage du récipient (35) ; et
un moyen d'ouverture (37A) ouvrant l'élément d'étanchéité (30) sur l'ouverture de sortie (29) lorsque le récipient (18) est poussé dans la section de montage du récipient (35) après l'engagement de la première partie d'engagement (28) dans la première partie engagée (42), **caractérisée en ce que** :
le moyen d'ouverture (37A) comprend une section de perforation (37A) perforant l'élément d'étanchéité (30), et une section d'entrée (47) en vue de l'entrée de l'agent liquide (32) s'étant écoulé hors de l'ouverture de sortie (29) ; et
la structure empêchant le détachement d'un récipient comprend en outre une deuxième partie engagée (40C) engagée par la première partie d'engagement (28) lorsque le récipient (18) est poussé dans la section de montage du récipient (35), la section de perforation (37A) ayant perforé l'élément d'étanchéité (30), la deuxième partie engagée (40C) empêchant la sortie de la section de perforation (37A) de l'intérieur du récipient contenant l'agent liquide (18).

2. Structure empêchant un détachement d'un récipient selon la revendication 1, dans laquelle :
la section de montage du récipient (35) comporte une rainure (40) s'étendant dans une direction dans laquelle le récipient (18) est poussé vers l'intérieur;
la première partie d'engagement (28) est constituée par une saillie agencée sur la face périphérique externe du récipient (18), la première partie d'engagement (28) rentrant dans la rainure (40) lorsque le récipient (18) est poussé dans la section de montage du récipient (35) ;
la première partie engagée (42) est constituée par une partie à griffe agencée sur la rainure (40), la partie à griffe (42) assurant une déformation élastique pour permettre le déplacement de la saillie (28) dans la direction de la poussée vers l'intérieur, et s'engageant dans la saillie (28) pour empêcher le déplacement du récipient (18) dans la direction du détachement (U) ; et
la deuxième partie engagée (40C) est une partie d'engagement à rainure, agencée sur la rainure (40) de plus vers le côté de la direction de la poussée vers l'intérieur que la partie à griffe (42), la deuxième partie engagée (40C) empêchant le déplacement de la saillie (28) dans la direction du déplacement (U) lorsque la saillie (28) est introduite.

3. Structure empêchant le détachement d'n récipient, comprenant :
une première partie d'engagement (150) agencée sur une face périphérique externe d'un récipient (18) contenant un agent liquide (32), le récipient (18) comportant une ouverture de sortie (29) de l'agent liquide (32) fermée par un élément d'étanchéité (30) ;
une première partie engagée (132) engagée par la première partie d'engagement (150) lorsque le récipient (18) est poussé dans une section de montage du récipient (35), la première partie engagée (132) arrêtant le détachement du récipient (18) de la section de montage du récipient (35) ; et
un moyen d'ouverture (37A) ouvrant l'élément d'étanchéité (30) sur l'ouverture de sortie (29) lorsque le récipient (18) est poussé dans la section de montage du récipient (35) après l'engagement de la première partie d'engagement (150) dans la première partie engagée (132), **caractérisée en ce que** :
le moyen d'ouverture (37A) comporte une partie de perforation perforant l'élément d'étanchéité (30), et une section d'entrée (47) permettant l'entrée de l'agent liquide (32) s'étant écoulé hors de l'ouverture de sortie (29) ;
la structure empêchant le détachement d'un récipient comprend en outre une deuxième partie d'engagement (152) agencée sur la face périphérique externe du récipient (18), la deuxième partie d'engagement (152) s'engageant dans la première partie engagée (132) lorsque le récipient (18) est poussé dans la section de montage du récipient (35), la section de perforation ayant perforé l'élément d'étanchéité (30), et la deuxième partie d'engagement (152) empêchant la sortie de la section de perforation d'intérieur du récipient contenant l'agent liquide (18).

4. Structure empêchant le détachement d'un récipient selon la revendication 3, dans laquelle :
la première partie d'engagement (150) est constituée par une première saillie agencée sur une face périphérique externe du récipient (18) ;
la deuxième partie d'engagement (152) est constituée par une deuxième saillie agencée sur le récipient (18), séparée de plus de l'ouverture de sortie que la première saillie (150) ; et
la première partie engagée (132) est constituée par une partie à griffe agencée sur la section de montage du récipient (35), la partie à griffe (132) assurant une déformation élastique pour permettre le déplacement de la première saillie (150) et de la deuxième saillie (152) dans une direction de poussée vers l'intérieur, et s'engagent dans la première saillie (150) et la deuxième saillie (152) et empêchant le déplacement du récipient (18) dans une direction de détachement (U).

5. Structure empêchant le détachement d'un récipient selon l'une quelconque des revendications 1 à 4, comprenant en outre un élément d'étanchéité (38) agencé sur la section de montage du récipient (35) de sorte à entrer en contact étroit avec une périphérie entière d'une partie de bordure de l'ouverture de sortie (29) et établir l'étanchéité entre le récipient (18) et la section de montage du récipient (35) lorsque la section de perforation perfore l'élément d'étanchéité (30).

6. Structure empêchant le détachement d'un récipient selon l'une quelconque des revendications 1 à 5, comprenant en outre un couvercle (162) recouvrant le récipient (18) poussé dans la section de montage du récipient (35) et la section de montage du récipient (35).

7. Structure empêchant le détachement d'un récipient selon la revendication 6, dans laquelle le couvercle (162) est formé à partir d'un matériau transparent ou d'un matériau semi-transparent.

8. Dispositif d'étanchéité et de pompage vers le haut (10), comprenant :
la structure empêchant le détachement d'un récipient selon l'une quelconque des revendications 1 à 7, l'agent liquide (32) étant un agent d'étanchéité utilisé pour la réparation d'un bandage pneumatique (100) ;
un moyen à air comprimé (12) produisant de l'air comprimé et amenant l'air comprimé vers la section d'entrée (47) ;
un tube d'alimentation en air et liquide (78) pour amener l'agent d'étanchéité s'étant écoulé dans la section d'entrée (47) et l'air comprimé dans le bandage pneumatique (100).
